# EUROPÄISCHE PATENTSCHRIFT

(11) **EP 1 529 426 B1**
(45) Veröffentlichungstag und Bekanntmachung des Hinweises auf die Patenterteilung: **09.05.2007**
(21) Anmeldenummer: 04024793.4
(22) Anmeldetag: 18.10.2004
(51) Int. Cl.: A01B 59/048, A01B 59/06, A01B 63/108, B62D 49/08

(54) **Vorderachsbock für landwirtschaftliche Nutzfahrzeuge**
Front-axle block for argicultural machines
Front-axe bloc pour des machines agricoles

(30) Priorität: 05.11.2003 DE 10352216
(43) Veröffentlichungstag der Anmeldung: 11.05.2005
(73) Patentinhaber: CNH Österreich GmbH, 4300 St. Valentin (AT)
(72) Erfinder: Waldburger, Christian, 4432 Ernsthofen (AT); Thanhofer, Karl, 4633 Kematen (AT)
(74) Vertreter: Feldkamp, Rainer

(56) Entgegenhaltungen:
- EP-A- 0 094 975
- EP-A- 0 630 179
- DE-A1- 3 644 019
- DE-C1- 3 823 491
- DE-C1- 4 129 034
- DE-U1- 29 711 691
- US-B1- 6 227 304

## Beschreibung

Die Erfindung betrifft einen Vorderachsbock für landwirtschaftliche Nutzfahrzeuge zum Befestigen sowohl der Vorderachse als auch aller sich im Frontbereich befindlichen Anbauteile einschließlich weiterer funktionaler Zubehörteile gemäß dem Oberbegriff des Anspruches 1.

Vorderachsböcke sind in verschiedenen Ausführungen bekannt. An ihnen werden heute durch den geforderten universellen Einsatz der landwirtschaftlichen Nutzfahrzeuge für unterschiedliche Arbeiten über spezielle Anbauteile, wie Fronthubwerk-Frontlader oder normale Fronthubwerke, verschiede Geräte angekoppelt. Durch diese Anbaugeräte können kurzfristig große und in unterschiedliche Richtung wirkende Kräfte in den Vorderachsbock und in die gesamte Rahmenkonstruktion eingebracht werden. Diese oftmals erheblichen Hebelmomente haben zu einer Reihe von sich unterscheidenden Konstruktionen für Vorderachsböcke geführt. Zum einen werden an einen zentralen Vorderachsbock zusätzlich seitliche Rahmen-Schweißkonstruktionen angeordnet. Solcherart Blechkonstruktionen sind fertigungstechnisch aufwändig und oftmals nicht verwindungssteif genug, so dass einzelne Teile einem sehr hohen Verschleiß unterliegen und relativ schnell ausgetauscht werden müssen. Damit geht ein erhöhter Montage- und Demontageaufwand einher. Es sind weiterhin Lösungen bekannt, wo in der Regel der Vorderachsbock aus wenigen Einzelteilen besteht. An ein zentrales Teil, das die Kräfte in die Hauptrahmenkonstruktion ableiten soll, sind weitere Einzelteile, die spezielle Funktionen ermöglichen, anmontiert. Dieses zentrale Teil wird ebenfalls in der Regel als ein Gussteil ausgeführt. Allerdings ist hierbei ebenfalls noch ein erhöhter Montageaufwand erforderlich und zur Beherrschung der Kräfte sind weitere Hilfsrahmenteile angeordnet.

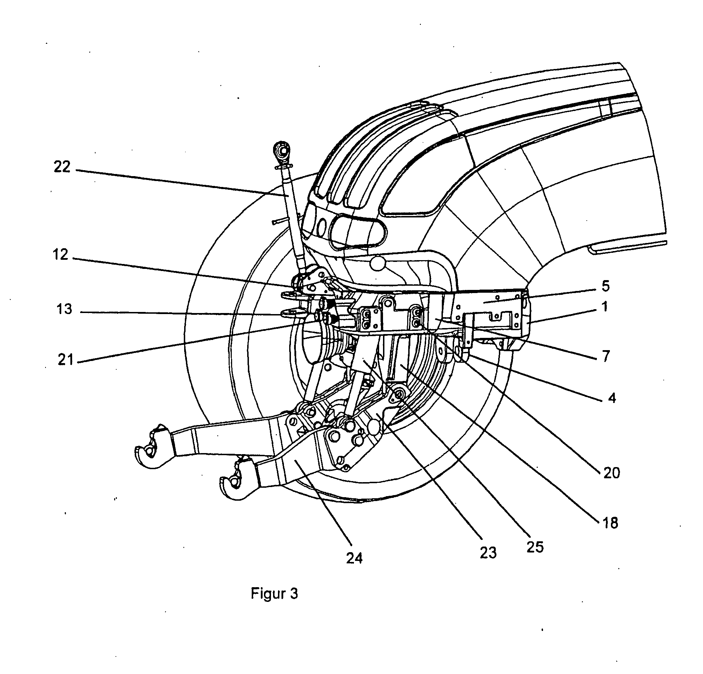

Als solch eine technische Lösung ist die Ausführung eines mehrteiligen Vorderachsbockes gemäß der DE 36 44 019 C2 anzusehen. Der Vorderachsbock besteht dabei aus einem Gussteil, wobei aber zusätzliche Anbauteile, wie z. B. die Lagerböcke für die Schwenkwelle der Unterlenker und ein zusätzliches Tragteil, ebenfalls als ein Gussteil ausgebildet, angeschraubt sind. Ebenfalls zusätzlich angeschraubt ist, wie aus Figur 3 ersichtlich, eine Befestigungslasche für den Oberlenker.

In der DE 32 16 589 A1 ist eine andere Konstruktion eines Vorderachsbockes beschrieben, bei der zusätzlich zum Vorderachsbock ein sich über mehr als die Hälfte der gesamten Länge des Ackerschleppers erstreckender Frontkrafthebertragrahmen angeordnet ist, um die Kräfte entsprechend abzuleiten. An diesem Frontkrafthebertragrahmen ist des weiteren über eine zusätzliche Quertraverse der Anlenkpunkt für den Oberlenker angeordnet. Nachteilig bei dieser Lösung sind der erhöhte Montageaufwand, bedingt durch die Verbindung zwischen Vorderachsbock und Frontkrafthebertragrahmen und weiterer zusätzlicher Anbauteile, und die fehlende Verwindungssteifigkeit dieser konstruktiven komplizierten Ausführung.

Aus der DE 27 58 978 ist eine technische Lösung bekannt, bei der an der Frontseite des Vorderachslagerbockes ein weiteres zusätzliches einstückiges Gussteil befestigt ist, das als Tragelement für eine frontseitige Geräteanbauvorrichtung einschließlich hierfür erforderlicher hydraulischer Hubzylinder ausgebildet ist und mittig eine Aussparung für eine geschützte Durchführung eines frontseitigen Zapfwellenstummels aufweist. Unterhalb des Zapfwellenstummels ist einstückig mit dem Tragelement ein Kupplungsmaul angeordnet. Nachteilig ist hierbei, dass diese konstruktiv mehrteilige ausgebildete Anordnung sehr weit nach vom ragt und den Anschluss von anderen Anbaugeräten an der Zapfwelle beeinträchtigt. Zudem muss diese Geräteanbauvorrichtung abgebaut werden, wenn ein Anbaugerät an das Kupplungsmaul angeschlossen werden soll. Weiterhin sind die hier vorliegenden Hebelverhältnisse für das Fronthubwerk sehr ungünstig.

Aus der DE 297 11 691 U1 ist weiterhin ein Vorderachsbock der im Oberbegriff des Anspruchs 1 genannten Art bekannt, der einteilig als ein Gussteil ausgebildet ist, an dessen Frontwand eine Oberlenkerbefestigungslasche befestigt ist, wobei im Inneren des Frontwandbereichs Kammern für einseitig wirkende Hubzylinder des Fronthubwerks ausgebildet sind. Auch hier werden zusätzliche Anbauteile verwendet. Der Vorderachsbock ist als ein multifunktional gestaltetes Gussteil ausgebildet.

Aufgabe der Erfindung ist es, einen Vorderachsbock zum frontseitigen Geräteanschluss für landwirtschaftliche Nutzfahrzeuge zu schaffen, an den ein optimierter und einfacher Anbau der Vorderachse, des Fronthubwerkes einschließlich daran angeordneter Anbauteile sowie zugehöriger Hydraulikelemente, des Abschleppmauls, des Oberlenkers und des Anschlusses für das Frontzapfwellengetriebe, möglich ist und bei dem die Krafteinleitung, die aus den Anbaugeräten und ihrer Betätigung kommt, so optimiert ist, dass eine einfache und schnelle Montage, eine bessere Reparaturmöglichkeit, eine hohe Lebensdauer aller Teile und eine Kostensenkung bei der Fertigung erreicht wird.

Die Aufgabe der Erfindung wird erfindungsgemäß mit den Merkmalen des Patentanspruchs 1 gelöst, wobei in den Unteransprüchen Merkmale aufgeführt sind, die die erfindungsgemäße Lösung in vorteilhafter Weise weiterentwickeln.

Am erfindungsgemäßen Vorderachsbock 1 für landwirtschaftliche Nutzfahrzeuge sind zum frontseitigen Geräteanschluss, wie an sich bekannt, Befestigungsflächen, Befestigungsbohrungen, Befestigungslaschen und Befestigungsöffnungen für Vorderachse, Fronthubwerk-Frontlader, Frontzapfwellengetriebe, Fronthubwerk einschließlich Unterlenker, Oberlenker und Hydraulikanschlüsse angeordnet. Der neuartige multifunktionale Vorderachsbock 1 besteht aus einem einstückig gestalteten Gussteil 2, welches so ausgebildet ist, dass es gleichzeitig als tragendes Bauteil für den gesamten vorderen Bereich des landwirtschaftlichen Nutzfahrzeuges dient. Das wannenförmige Gussteil 2 ist deshalb mit unterschiedlich dicken Außenwänden, Innenwänden, Rippen und Auswölbungen konstruiert. In seinem äußeren hinteren Bereich ist es verstärkt und nicht spiegelsymmetrisch ausgebildet. Dabei ist auf der einen Seite eine vertikale Befestigungsöffnung 3 und auf der anderen Seite eine horizontale Befestigungslasche 4 zur Befestigung der Federzylinder der Vorderachse angeordnet. Weiterhin sind am Gussteil 2 außen in seinem hinteren Bereich links und rechts auf der Oberfläche der Seitenwände 7 und 8 Auflageflächen 5 zur Frontladerbefestigung einschließlich Gewindebohrungen 6 zum einfachen und schnellen Befestigen eines Frontladers angeordnet. Jeweils in der linken Seitenwand 7 und/oder wahlweise der rechten Seitenwand 8 und/oder in der Frontwand 9 sind ein oder mehrere Bedienelementaussparungen 10 ausgebildet.

Weiterhin sind in der linken Seitenwand 7 und/oder wahlweise der rechten Seitenwand 8 und/oder in der Frontwand 9 ein oder mehrere Anschlussaussparungen 11 ausgebildet. An der Frontwand 9 ist eine Oberlenkerbefestigungslasche 12 so ausgebildet, dass in einfacher Art und Weise ein Oberlenker, wie er allgemein bei solcherart landwirtschaftlichen Nutzfahrzeugen üblich ist, um Anbaugeräte zu befestigen, bei Bedarf montiert werden kann. Damit z. B. das gesamte landwirtschaftliche Nutzfahrzeug abgeschleppt werden kann oder damit bei der Fahrt spezielle Anbaugeräte zuverlässig arretiert werden können, ist ebenfalls an der Frontwand 9 ein Zugmaul 13 angeordnet. Der Frontwandbereich 14 ist verstärkt ausgeführt und mit zusätzlichen Innenwänden und Rippen versehen. In seinem Inneren sind links und rechts Befestigungsöffnungen 15 für die Hubzylinder, die den Unterlenker betätigen angeordnet. Ebenfalls im Inneren des verstärkten Frontwandbereichs 14 ist ein Frontzapfwellengetrieberaum 16 einschließlich einer zugehörigen Getriebebefestigungsfläche 17 mit zugehörigen Getriebebefestigungsbohrungen ausgespart. Dadurch lässt sich das Frontzapfwellengetriebe bei Bedarf problemlos geschützt gegen äußere Einflüsse und Verschmutzungen anordnen und befestigen. An der Bodenfläche des wannenförmigen Gussteils 2 sind Anlenkstützen 18 einschließlich Befestigungsbohrungen 19 für die Unterlenkerschwingen 23 angeordnet. Überraschenderweise wurde gefunden, dass im Gegensatz zu den bisher aus dem Stand der Technik bekannten, aus mindestens zwei Teilen bestehenden Vorderachsböcken, dass alle erdenklichen Funktionen durch ein einziges erfindungsgemäßes Gussteil 2 realisiert werden können. Der multifunktionale Vorderachsbock 1 ist dabei so konstruiert, dass er alle an ihm wirkenden Zug-, Druck-, Biege-, Torsions- und Scherkräfte als auch sonstige oftmals stoßartig wirkenden Kräfte problemlos aufnehmen kann und gleichzeitig erstmals ebenfalls als ein allein voll tragendes Bauteil für den vorderen Bereich des landwirtschaftlichen Nutzfahrzeuges dienen kann. Insbesondere ermöglicht der erfindungsgemäße Vorderachsbock 1 eine optimierte Krafteinleitung der Kräfte der über Unterlenkerschwingen 23 befestigten beiden Schenkel des Unterlenkers 24. Durch die neuartige Konstruktion wird es erstmals möglich, die Drehpunkte der Unterlenkerschwingen 23 so weit wie möglich nach hinten in Richtung zum Schwerpunkt des landwirtschaftlichen Nutzfahrzeuges hin zu verlegen. Deshalb lässt sich die gesamte Geometrie des Systems Vorderachsbock - Unterlenkerschwinge - Unterlenker - Hubzylinder so verändern, dass sich verbesserte Hebelverhältnisse für das Heben und Senken mittels der Hubzylinder 25 des Fronthubwerkes ergeben.

In einer bevorzugten Ausführung des erfindungsgemäßen Vorderachsbocks 1 für landwirtschaftliche Nutzfahrzeuge sind in den Bedienelementaussparungen 10 Taster 20 für Fronthubwerk und andere Anbauteile angeordnet. Weiterhin ist es vorteilhaft, in den Anschlussaussparungen 11 die Steckkupplungen 21 für alle notwendigen Hydraulikanschlüsse für an das Fronthubwerk anzubauende landwirtschaftliche Geräte anzuordnen. Dadurch sind die Taster 20 und die Steckkupplungen 21 zum einen in einer besonders bedienerfreundlichen Weise durch einen Bediener zugänglich und nutzbar und zum anderen sind sie zuverlässig gegen mechanische Beschädigungen geschützt. Um eine Verschmutzung bei Nichtbenutzung zu verhindern, können sie bei Bedarf zusätzlich durch am Vorderachsbock angeordnete Abdeckkappen geschützt werden.

In einer speziellen weiteren Ausbildung des Vorderachsbocks für landwirtschaftliche Nutzfahrzeuge ist die Oberfläche des tragenden multifunktionalen Gussteils 2 als Dichtfläche gegenüber dem übergeordneten Aufbau der Motorhaube ausgebildet. Dadurch wird der Innenraum des Vorderachsbocks so abgedichtet, dass keinerlei Verschmutzungen entstehen können. So kann der Front-zapfwellengetrieberaum 16 bereits dadurch ausreichend abgedichtet sein. Für spezifische Anwendungen können die Innenwände oder Innerrippen des Gussteils 2 des Vorderachsbocks 1, wenn es gegenüber den darüber angeordneten Bauteilen nicht dichtend ausgeführt ist, so im Inneren im Bereich des Frontzapfwellengetrieberaumes 16 ausgebildet werden, dass es gleichzeitig als Getriebegehäuse dient und in ihm direkt das Frontzapfwellengetriebe eingebaut und gelagert ist. Sinnvollerweise ist dann dieses Getriebegehäuse flüssigkeitsdicht gekapselt ausgeführt.

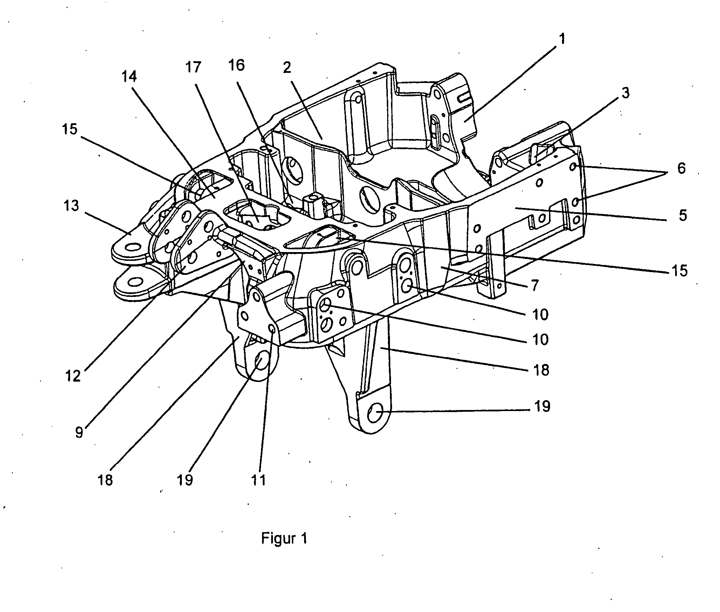

Die Erfindung soll nachstehend in einem bevorzugten Ausführungsbeispiel an Hand der Figuren 1 bis 3 für den Anwendungsfall in einem Ackerschlepper näher beschrieben werden.
- Fig. 1: zeigt den erfindungsgemäßen multifunktionalen Vorderachsbock 1 als einstückiges Gussteil 2,
- Fig. 2: zeigt das einstückige Gussteil 2 einschließlich des eingebauten Frontzapfwellengetriebes 26, weiterer Betätigungselemente und Anbauteile und
- Fig. 3: zeigt das Gussteil 2 als tragendes Konstruktionsteil in eingebauten Zustand im vorderen Bereich eines Ackerschleppers.

Das Gussteil 2 ist in vorliegender Ausführungsform so optimiert, dass alle möglichen anliegenden Kräfte über eine geeignete Dimensionierung der Wanddicken, der Anordnung der Innenwände, Rippen und Auswölbungen und ihrer räumlichen Lage zueinander im gesamten Vorderachsbock so verteilt werden, dass keinerlei Überbeanspruchungen des Materials erfolgen können. Im Gegensatz zu den bisher aus dem Stand der Technik bekannten Lösungen lassen sich alle bei einem Ackerschlepper denkbaren Funktionen für den vorderen Bereich problemlos realisieren, obwohl der Vorderachsbock 1 nur aus einem einzigen Gussstück besteht. Durch die erfindungsgemäße Ausbildung entsteht ein verwindungssteifes Bauteil, das gleichzeitig auch als voll tragendes Bauteil für einen Ackerschlepper dient. Dadurch ist es erstmals möglich, auch in der Rahmenkonstruktion des gesamten Ackerschleppers Vereinfachungen vorzunehmen, die im Zusammenhang mit dem erfindungsgemäßen Vorderachsbock 1 zu beträchtlichen Kosteneinsparungen in der Fertigung führen. Zur Krafteinleitung der Anbaugeräte und zur Ankopplung an die anderen tragenden Bauteile des Ackerschleppers, wie Getriebe und Motorblock, ist das Gussteil 2 in seinem hinteren Bereich, d. h. zum Getriebe und Motorblock hin, verstärkt ausgebildet. Ebenfalls ist am Vorderachsbock 1 die Vorderachse angeordnet (in den Figuren nicht dargestellt). Zur Befestigung der Federzylinder der Vorderachse sind des weiteren im hinteren Bereich des Gussteils 2 eine vertikale Befestigungsöffnung 3 und eine horizontale Befestigungslasche 4 angeordnet. Zur verwindungssteifen Befestigung sind links und rechts an den Seitenwänden 7 und 8 großflächige Auflageflächen 5 zur Frontladerbefestigung ausgebildet. Gleichzeitig sind die erforderlichen Gewindebohrungen zur Befestigung eines Frontladers 6 eingebracht, wobei an diesen Stellen Wandverstärkungen ausgebildet sind. An der Frontwand 9 ist in der mittig angeordneten Oberlenkerbefestigungslasche 12 der Oberlenker 22 montiert. Unmittelbar rechts daneben ist das Zugmaul 13 ausgebildet.

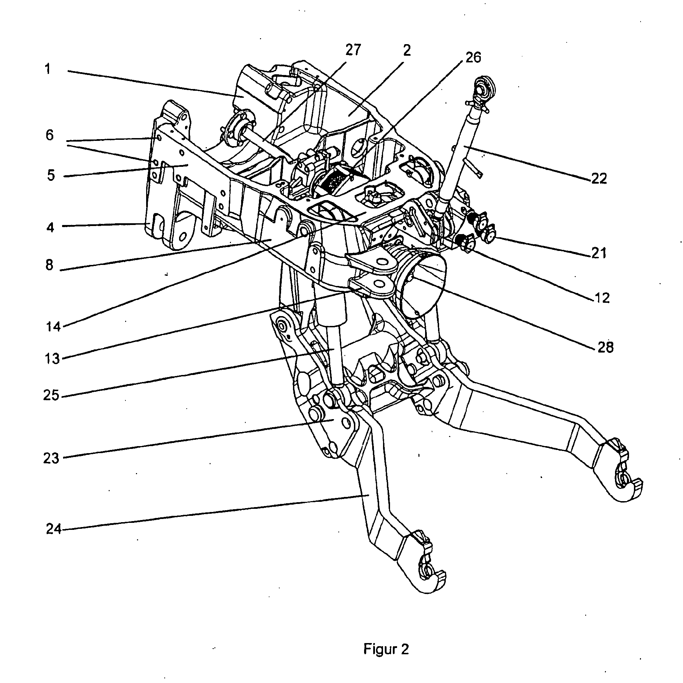

Durch die Frontwand 9 hindurch ist mittig der Stumpf der Frontzapfwelle 28 zum Anschluss und damit Direktantrieb der entsprechenden Anbaugeräte geführt. Im Inneren des verstärkten Frontwandbereiches 14 ist der Frontzapfwellengetriebraum 16 mit der Getriebebefestigungsfläche 17 angeordnet. Aus Figur 2 ist ersichtlich, wie die Frontzapfwellenkupplung 26 gelagert und befestigt ist. Der Anschluss des Frontzapfwellengetriebes an das Hauptgetriebe erfolgt über die Zapfwellenverlängerung 27.

An der Bodenfläche des wannenförmigen Gussteils 2 sind zwei Anlenkstützen 18 einschließlich der darin eingebrachten Befestigungsbohrungen 19 für die Unterlenkerschwinge 23 ausgebildet. Figur 2 zeigt eine mögliche Lösung für die Ausbildung und Befestigung der Unterlenkerschwinge 23 zum einen in den Befestigungsbohrungen für die Unterlenkerschwinge 19 und zum anderen eine Kopplungsmöglichkeit der Unterlenkerschwinge 23 mit dem Unterlenker 24. Das System der Unterlenkerschwinge 23 - Unterlenker 24 wird über die beiden Hubzylinder 25 betätigt, d. h. gehoben und gesenkt. Die Hubzylinder sind im verstärkten Frontwandbereich 14 des Gussteils 2 in den Befestigungsöffnungen für die Hubzylinder 15 gelagert und befestigt. Im Ergebnis der erfindungsgemäßen Ausbildung des Vorderachsbockes 1 wird es erstmals möglich, zum einen eine sehr kompakte Bauweise aller Teile des Fronthubwerkes zu erreichen und zum anderen durch die weit nach hinten verlagerten Anlenkpunkte der Unterlenkerschwinge 23 sehr günstige kinematische Verhältnisse für die einzelnen Teile des Fronthubwerkes zu schaffen und die Kraftflüsse im System insgesamt zu reduzieren. In Figur 2 sind weiterhin vorteilhafte Anordnungen in der linken Seitenwand 7 von Tastern 20 in den Bedienelementaussparungen 10 gezeigt. Dabei handelt es sich um Tasterpaare, zum Beispiel zur Bedienung des Fronthubwerkes und eines hydraulisch funktionierenden Oberlenkers. An der linken Seite der Frontwand 14 ist, wie aus Figur 2 und 3 ersichtlich, eine Materialauswölbung im Gussteil 2 ausgebildet, in der drei Anschlussaussparungen 11 eingebracht sind. In diesen Anschlussaussparungen 11 sind drei Steckkupplungen für Hydraulikanschlüsse 21 angeordnet.

In Figur 3 ist die einfache Integration des voll tragenden Vorderachsbockes 1 in die Bauweise des Ackerschleppers und die Anordnung der weiteren Aufbauten im vorderen Bereich gezeigt.

Durch die erfindungsgemäße Ausbildung des Vorderachsbockes 1 als ein einstückiges multifunktionales Gussteil 2 ist es erstmals möglich alle erdenklichen Anbaugeräte und Anbauteile mit einem einzigen Teil zu realisieren, einen sehr hohen Grad an Vormontierbarkeit zu erreichen und damit eine sehr einfache und schnelle Montage aller Teile sowie auch des gesamten Vorderachsbockes in den Ackerschlepper zu ermöglichen. Modifikationen des Gussteils 2 für weitere hier nicht beschriebene Anbauanforderungen können problemlos vorgenommen werden.

### Liste der Bezugszeichen

- 1: Vorderachsbock
- 2: tragendes multifunktionales Gussteil
- 3: vertikale Befestigungsöffnung
- 4: horizontale Befestigungslasche
- 5: Auflagefläche zur Frontladerbefestigung
- 6: Gewindebohrungen zur Befestigung eines Frontladers
- 7: linke Seitenwand
- 8: rechte Seitenwand
- 9: Frontwand
- 10: Bedienelementaussparungen
- 11: Anschlussaussparungen
- 12: Oberlenkerbefestigungslasche
- 13: Zugmaul
- 14: verstärkter Frontwandbereich
- 15: Befestigungsöffnungen für Hubzylinder
- 16: Frontzapfwellengetrieberaum
- 17: Getriebebefestigungsfläche
- 18: Anlenkstütze
- 19: Befestigungsbohrungen für Unterlenkerschwinge
- 20: Taster
- 21: Steckkupplungen für Hydraulikanschlüsse
- 22: Oberlenker
- 23: Unterlenkerschwinge
- 24: Unterlenker
- 25: Hubzylinder
- 26: Frontzapfwellenkupplung
- 27: Zapfwellenverlängerung
- 28: Fronzapfwelle

## Patentansprüche

1. Vorderachsbock für landwirtschaftliche Nutzfahrzeuge zum frontseitigen Geräteanschluß, mit Befestigungsflächen, Befestigungsbohrungen, Befestigungslaschen und Befestigungsöffnungen für Vorderachse, Fronthubwerk-Frontlader, Frontzapfwellen-getriebe, Fronthubwerk einschließlich Unterlenker, Oberlenker und Hydraulikanschlüsse, wobei der Vorderachsbock (1) als ein tragendes einstückiges und multifunktional gestaltetes Gussteil (2) ausgebildet ist, an dessen Frontwand (9) eine Oberlenkerbefestigungslasche (12) befestigt ist, und wobei im Inneren des Frontwandbereichs (14) links und rechts Kammern für Hubzylinder des Fronthubwerks ausgebildet sind,
**dadurch gekennzeichnet, dass** der Vorderachsbock (1) durch ein einziges Gussteil (2) ausgebildet ist, das folgende Merkmale aufweist:
a) das Gussteil (2) ist in seinem äußeren hinteren Bereich verstärkt und nicht spiegelsymmetrisch entlang der Längsachse des Nutzfahrzeugs ausgebildet, wobei auf der einen Seite eine vertikale Befestigungsöffnung (3) und auf der anderen Seite eine horizontale Befestigungslasche (4) zur Befestigung der Federzylinder der Vorderachse angeordnet sind,
b) am Gussteil (2) sind außen in seinem hinteren Bereich links und rechts Auflageflächen (5) zur Frontladerbefestigung einschließlich Gewindebohrungen (6) angeordnet,
c) in den Seitenwänden (7, 8) links und/oder rechts und/oder in der Frontwand (9) sind ein oder mehrere Bedienelementaussparungen (10) ausgebildet,
d) in einer Seitenwand (7, 8) links und/oder rechts und/oder in der Frontwand (9) sind ein oder mehrere Anschlussaussparungen (11) ausgebildet,
e) die Oberlenkerbefestigungslasche (12) ist einstückig an der Frontwand (9) ausgebildet,
f) an der Frontwand (9) ist ein Zugmaul (13) ausgebildet,
g) der Frontwandbereich (14) ist verstärkt und weist in seinem Inneren links und rechts Befestigungsöffnungen (15) für Hubzylinder auf,
h) im Inneren des verstärkten Frontwandbereichs (14) ist ein Frontzapfwellengetrieberaum (16) einschließlich einer zugehörigen Getriebebefestigungsfläche (17) mit Getriebebefestigungsbohrungen ausgespart,
i) und die Bodenfläche des Gussteils (2) ist mit Anlenkstützen (18) einschließlich Befestigungsbohrungen (19) für die Unterlenkerschwingen ausgebildet.

2. Vorderachsbock für landwirtschaftliche Nutzfahrzeuge nach Anspruch 1, **dadurch gekennzeichnet, dass** in den Bedienelementaussparungen (10) Taster (20) für Fronthubwerk und andere Anbauteile angeordnet sind.

3. Vorderachsbock für landwirtschaftliche Nutzfahrzeuge nach Anspruch 1, **dadurch gekennzeichnet, dass** in den Anschlussaussparungen (11) Steckkupplungen (21) für Hydraulikanschlüsse angeordnet sind.

4. Vorderachsbock für landwirtschaftliche Nutzfahrzeuge nach Anspruch 1 bis 3, **dadurch gekennzeichnet, dass** die Oberfläche des tragenden multifunktionalen Gussteils (2) als Dichtfläche gegenüber dem übergeordneten Aufbau der Motorhaube ausgebildet ist.

5. Vorderachsbock für landwirtschaftliche Nutzfahrzeuge nach Anspruch 1 bis 4, **dadurch gekennzeichnet, dass** der Frontzapfwellengetrieberaum (16) so ausgebildet ist, dass er als Getriebegehäuse dient und in ihm direkt das Frontzapfwellengetriebe eingebaut ist und dieses Getriebegehäuse flüssigkeitsdicht gekapselt ausgeführt ist.

## Claims

1. Front axle casing for agricultural utility vehicles with mounting surfaces, mounting holes, mounting plates and mounting openings for the front axle, front lifting gear-front loader, front power take-off gear, front lifting gear including lower link, upper link and hydraulic connections for attaching implements to the front end of said agricultural utility vehicles
**characterized in that**
a) the front axle casing (1) is designed as a load-bearing one-piece multifunctional casting (2),
b) the outer rear wall of the casting (2) is reinforced and not symmetrical providing a vertical mounting opening (3) on one side and a horizontal mounting plate (4) on the other side to connect the spring cylinders of the front axle,
c) to the right and left of the casting's (2) outer rear wall bearing surfaces (5) with tapped holes (6) are provided to mount the front loader,
d) one or more control element recesses (10) are provided in the side walls (7, 8) on the left and/or on the right and/or in the front wall (9),
e) one or more connection recesses (11) are provided in one side wall (7, 8) on the left and/or on the right and/or in the front wall (9),
f) an upper link mount (12) is provided on the front wall (9),
g) a towing jaw (13) is provided on the front wall (9),
h) mounting openings (15) for lift cylinders are provided inside the reinforced front wall section (14) on the left and right,
i) a recessed front power take-off gear compartment (16) with a transmission mounting surface (17) and transmission mounting holes are provided in the reinforced front wall section (14),
j) and the bottom of the casting (2) features pivot supports (18) with mounting holes (19) for the lower link rocker.

2. Front axle casing for agricultural utility vehicles according to claim 1, **characterized in that** sensors (20) for the front lifting gear and other mounting parts are arranged in the control element recesses (10).

3. Front axle casing for agricultural utility vehicles according to claim 1, **characterized in that** plug-in couplings (21) for hydraulic connections are arranged in the connection recesses (11).

4. Front axle casing for agricultural utility vehicles according to claims 1 to 3, **characterized in that** the surface of the load-bearing multifunctional casting (2) is designed as a sealing surface for the engine hood located above.

5. Front axle casing for agricultural utility vehicles according to claims 1 to 4, **characterized in that** the front power take-off gear compartment (16) is designed to serve as a transmission housing to accommodate the front power take-off gear, and that this transmission housing is a liquid-tight construction.

## Revendications

1. Support d'essieu avant pour véhicules utilitaires agricoles pour le raccordement d'outils à l'avant, avec surfaces de fixation, taraudages de fixation, pattes de fixation et ouvertures de fixation pour l'essieu avant, relevage frontal-chargeur frontal, transmission à prise de force frontale, relevage frontal avec bras oscillant inférieur, bras oscillant supérieur et connexions hydrauliques,
**caractérisé en ce que**
a) le support d'essieu avant (1) est configuré comme une pièce de fonderie (2) porteuse, d'un seul tenant et multifonctionnelle,
b) la pièce de fonderie (2) est configurée de manière renforcée et non exactement symétrique dans sa partie arrière extérieure, une ouverture de fixation verticale (3) étant disposée d'un côté et une patte de fixation horizontale (4) de l'autre pour la fixation des cylindres élastiques de l'essieu avant,
c) sur la pièce de fonderie (2) à l'extérieur dans sa partie arrière, à gauche et à droite, des surfaces d'appui (5) sont disposées pour la fixation du chargeur frontal, y compris des taraudages (6),
d) un ou plusieurs évidements pour l'élément de commande (10) sont configurés dans les parois latérales (7,8) à gauche et/ou à droite et/ou dans la paroi avant (9),
e) dans une paroi latérale (7,8), à gauche et/ou à droite, et/ou dans la paroi avant (9), un ou plusieurs évidements de raccordement (11) sont configurés,
f) une patte de fixation du bras supérieur oscillant (12) est configurée sur la paroi avant (9),
g) un bec de traction (13) est configuré sur la paroi avant (9),
h) des ouvertures de fixation (15) pour des cylindres de levage sont configurées à gauche et à droite, à l'intérieur de la zone de la paroi avant renforcée (14),
i) à l'intérieur de la zone de la paroi avant renforcée (14), un logement de la transmission de la prise de force (16), y compris une surface de fixation de transmission correspondante (17) est aménagée avec des taraudages de fixation de la transmission,
j) et le fond de la pièce de fonderie (2) est configuré avec des appuis d'articulation (18), y compris des taraudages de fixation (19), pour les coulisses du bras oscillant inférieur.

2. Support d'essieu avant pour véhicules utilitaires agricoles selon la revendication 1, **caractérisé en ce que** des palpeurs (20) pour le relevage frontal et d'autres éléments montés sont disposés évidements d'éléments de commande (10).

3. Support d'essieu avant pour véhicules utilitaires agricoles selon la revendication 1, **caractérisé en** de que des accouplements emmanchés (21) pour des connexions hydrauliques sont montés dans les évidements de raccordement (11).

4. Support d'essieu avant pour véhicules utilitaires agricoles selon les revendications 1 à 3, **caractérisé en ce que** la surface de la pièce de fonderie multifonctionnelle porteuse (2) est configurée comme une surface étanche par rapport au montage du capot du moteur à la partie supérieure.

5. Support d'essieu avant pour véhicules utilitaires agricoles selon la revendication 1, **caractérisé en ce que** le logement de la transmission de la prise de force frontale (16) est configuré de manière à servir de logement de la transmission et que la transmission de la prise de force frontale est intégrée directement dans celui-ci et que ce logement de la transmission est exécuté de manière encapsulée pour être étanche aux liquides.
